# EUROPÄISCHE PATENTSCHRIFT

(11) **EP 0 906 172 B1**
(45) Veröffentlichungstag und Bekanntmachung des Hinweises auf die Patenterteilung: **20.02.2002**
(21) Anmeldenummer: 97925988.4
(22) Anmeldetag: 09.06.1997
(51) Int. Cl.: B24B 3/00, B24B 27/00, A63C 11/06, B23Q 7/00

(54) **VORRICHTUNG ZUM BEARBEITEN LÄNGLICHER GEGENSTÄNDE**
DEVICE FOR MACHINING OF ELONGATE OBJECTS
DISPOSITIF D'USINAGE D'OBJETS ALLONGES

(30) Priorität: 07.06.1996 CH 144296
(43) Veröffentlichungstag der Anmeldung: 07.04.1999
(73) Patentinhaber: Risa-Tech KG, 9490 Vaduz (LI)
(72) Erfinder: RITTER, Christoph, FL-9490 Vaduz (LI)
(74) Vertreter: Kaminski, Susanne, Dr.
(86) Internationale Anmeldenummer: EP9702994
(87) Internationale Veröffentlichungsnummer: WO9747431

(56) Entgegenhaltungen:
- AT-B- 397 925
- DE-A- 3 805 023
- DE-B- 1 031 722
- DE-C- 193 476
- DE-U- 8 804 809

## Beschreibung

Die Erfindung bezieht sich auf eine Vorrichtung zum Bearbeiten, insbesondere zum Schleifen von Seitenflächen länglicher Gegenstände an mindestens einer Längsseite, in einer besonders platzsparenden, für die halb- oder vollautomatische Bearbeitung geeigneten Ausführung.

Herkömmliche halb- oder ganzautomatische Vorrichtungen zum Schleifen der Seitenflächen länglicher Gegenstände, wie zum Beispiel Balken, Bretter, Metall und Kunststoffprofile, Skier, Snowboards und anderer Gleitsportgeräte werden nach heutigem Stand der Technik in Längsrichtung, die sich üblicherweise mit der Bearbeitungsrichtung deckt, mit dem Schleifgut beschickt und dieses gegen ein feststehendes Werkzeug geführt um die entsprechende Bearbeitung vorzunehmen.

So beschreibt AT 397 925 B beispielsweise eine Bearbeitungsvorrichtung mit speziellen Vorkehrungen zur Bearbeitung von Skiern mit montierter Bindung, die aus einem Rollengang mit verschiedenen Arbeitsmodulen besteht. Die Skier werden dabei einzeln durch eine Zwangsförderung den entsprechenden Arbeitsstationen zugeführt und durch spezielle Niederhalterollen gegen das Werkzeug gepresst und bearbeitet. Dabei wird ein Modul zum Ausbessern des Skibelags sowie verschiedene Module zum Kanten- und Belagschleifen durchlaufen.

In DE 38 05 023 A1 wird eine Einrichtung zum Bearbeiten von Laufsohlen von Skiern, insbesondere zum Schleifen des Laufbelags und der Stahlkanten beschrieben, wobei der jeweilige Ski mit Bindung an einer Tragschiene befestigt wird. Die durch Laufrollen geführte Schiene wird durch eine Vorschubrolle mit dem Ski gegen ein feststehendes Werkzeug bewegt. Um dabei ein möglichst gleichmässiges Abschleifen des Laufflächenbelags zu erreichen, müssen besondere Vorkehrungen wie zum Beispiel das Anbringen einer schwenkbaren Wippe über dem Schleifstein, getroffen werden.

Eine Vorrichtung gemäß Oberbegriff des Anspruchs 1 ist an dem Handbuch der Fertigungstechnik, Band 3/2, Carl Hanser Verlag, München, Wien, 1980, Seite 156 bekannt.

All diese Vorrichtungen können zwar, im Gegensatz zu den in Skizentren und Seilbahnstationen verwendeten Wachstrassen, die der Skifahrer mit angezogenen Skiern durchläuft, auch Beschädigungen der Lauffläche und der Kanten ausbessern, sind dafür aber nicht in ähnlich einfacher Weise von einem Laien bedienbar, weshalb ein Einsatz als Selbstbedienungsautomat nicht ohne weitere Verbesserungen in Betracht gezogen werden kann.
Ein weiterer Nachteil ist der grosse Platzbedarf derartiger Bearbeitungsstrassen, der sich aus der linearen Verknüpfung der einzelnen Bearbeitungsmodule ergibt und entsprechend lange Wege zwischen Ein- und Ausgabeeinheit bedingt, wodurch der Einsatz in kleineren Werkstätten verhindert, und eine Einmannbedienung erschwert werden. Schliesslich ist es bei oben erwähnten Einrichtungen nicht ohne grösseren Aufwand möglich, die Bearbeitungsvorrichtung an Werkstücke mit unterschiedlichen Abmessungen anzupassen (z.B.: Ski, Snowboard).

Die Erfindung zielt darauf ab, eine Vorrichtung zum Bearbeiten von Seitenflächen länglicher Gegenstände zur Verfügung zu stellen, die die oben genannten Nachteile, wie einen grossen Platzbedarf, eine durch die manuelle Befestigung jedes einzelnen Gegenstandes aufwendige Bedienung und eine geringe Flexibilität der Vorrichtung gegenüber unterschiedlich dimensionierten Werkstücken vermeidet. Die vorliegende, in Anspruch 1 definierte Erfindung zeichnet sich daher im wesentlichen durch folgende funktionelle Eigenschaften aus:
- Die Eingabe erfolgt durch einfaches Auflegen auf einem Zuführtisch.
- Es können ein oder mehrere längliche Gegenstände gleichzeitig eingelegt und anschliessend bearbeitet werden.
- Es können längliche Gegenstände unterschiedlicher Abmessungen bearbeitet werden.
- Die Ausgabe kann in unmittelbarer Nähe oder direkt auf der Zuführeinrichtung erfolgen.

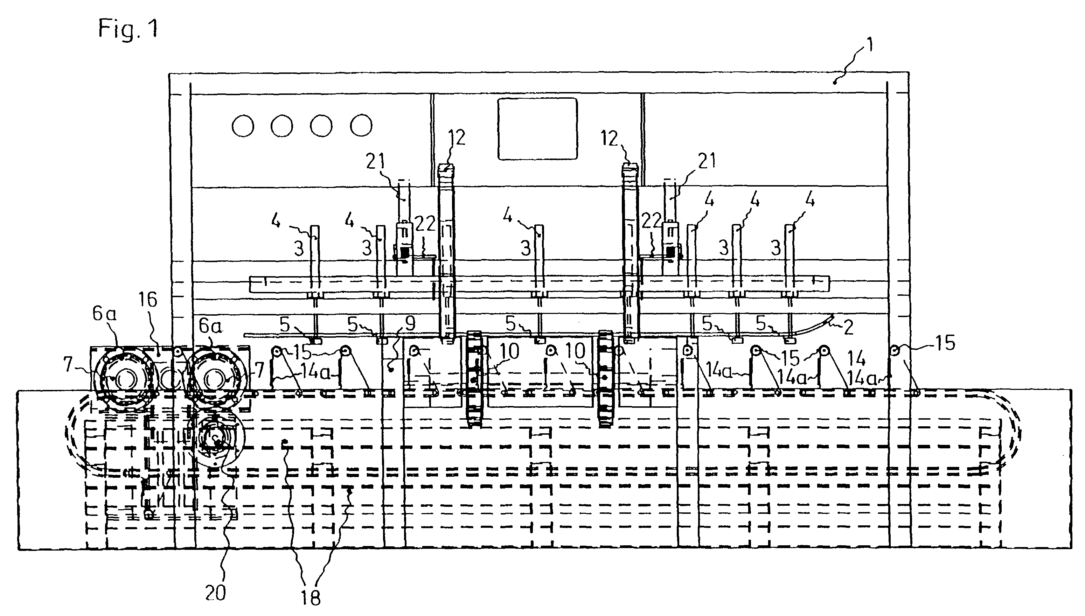

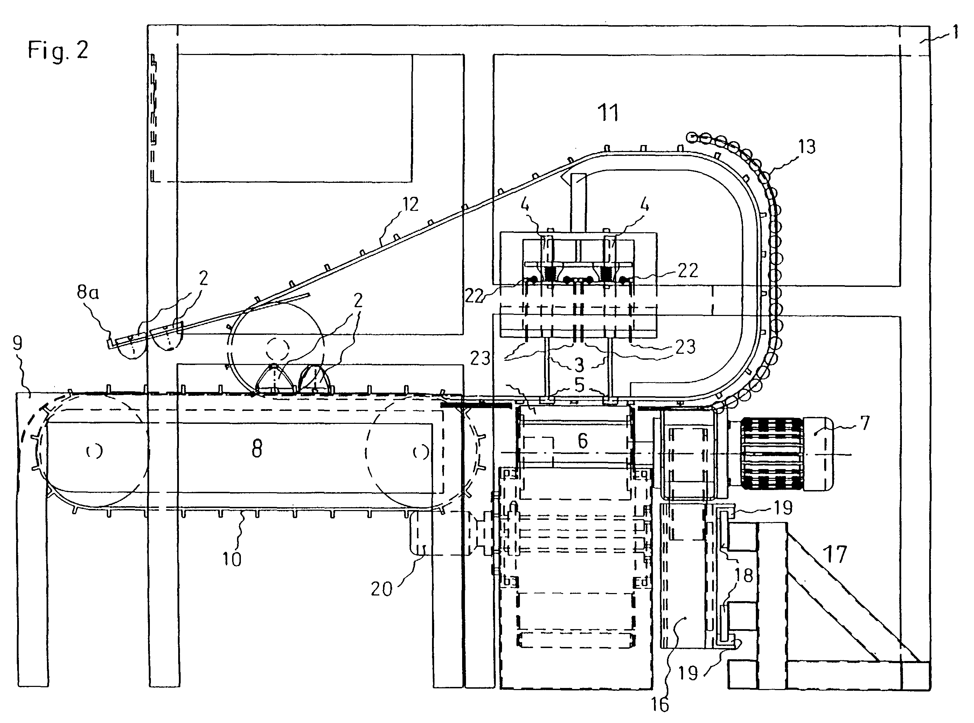

Die Verwirklichung der erwünschten funktionellen Eigenschaften kann beispielsweise durch eine Vorrichtung zur Bearbeitung von Skiern, wie sie in Fig. 1 (Frontansicht) und Fig. 2 (Seitenansicht) dargestellt ist, erreicht werden:

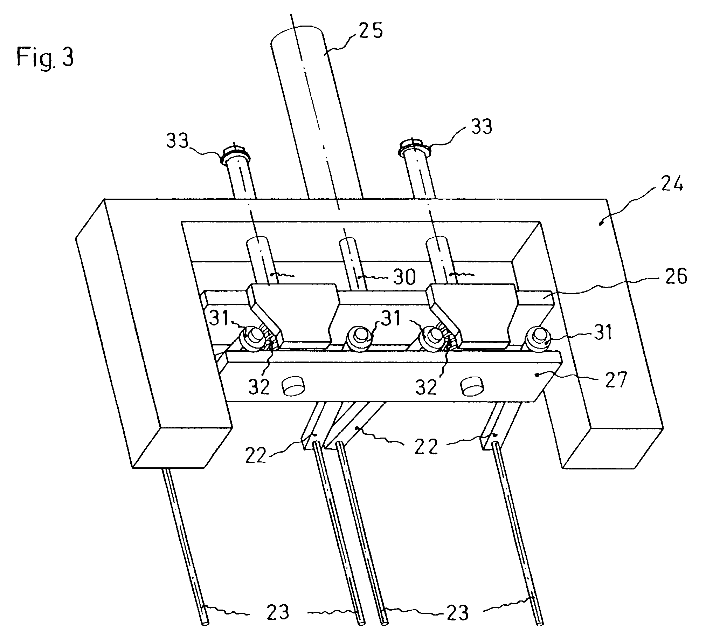

Die Zeichnungen zeigen einen Zuführtisch (9) mit integrierten Zuführbändern (10), in deren Ausnehmungen ein Paar Ski (mit oder ohne Bindung) parallel zur vorderen Tischkante, mit den Laufflächen nach unten eingelegt wird.
Anschliessend werden die Ski von den Zuführbändern in das Innere der Vorrichtung bis direkt vor die Bearbeitungsstation gefördert. Durch ein oder mehrere synchron zu den Zuführbändern (10), parallel über der Tischoberfläche laufende Rückführbänder (12), die ähnliche Mitnahmevorrichtungen (Ausnehmungen, Noppen oder ähnliches) aufweisen werden die Ski über einen Spalt zwischen Zuführtisch und Bearbeitungsstation auf ein Rollenkettenband (14) gefördert. Um ein eventuelles Verklemmen zu verhindern, ist besagter Spalt zumindest deutlich kleiner als die halbe Auflagebreite des Skis zu halten. Werden wie in Fig. 1 und 2 dargestellt, je zwei Zuführ- und Rückführbänder verwendet, die selbstverständlich auch als Ketten oder als andere in der Fördertechnik gebräuchliche umlaufende Fördermittel ausgebildet sein können, so ist es im speziellen Fall der Bearbeitung von Skiern oder Snowboards, die mit montierter Bindung bearbeitet werden sollen, von Vorteil, den Platz zwischen den Förderbändern so gross zu bemessen, dass die entsprechenden Bindungselemente dazwischen zu liegen kommen. Auf dem Rollenkettenband (14) werden die Ski mittels einer in Fig. 3 und unten näher erläuterten Zentriereinrichtung (21) parallel zur Schleifrichtung ausgerichtet, mittels Pneumatikzylindern (4) mit Polstern aus einem elastischen rutschfesten Material (5) die auch als Vakuumsauger ausgebildet sein können, gegen das Rollenkettenband (14) gepresst und anschliessend durch ein in dem Rollenkettenband (14) montiertes Schleifwerkzeug (6) bearbeitet. Der Ski (2) wir dabei quasi freischwebend auf dem durchlaufenden, vorzugsweise mit Splitterschutzplatten (14a) versehenen, Rollenkettenband (14) geschliffen, das vor und hinter dem Werkzeug (6), bei Verwendung von Tandemschleifwerkzeug (6 wie abgebildet) eventuell auch zwischen den einzelnen Schleifkörpern (6a) eine ausreichende Anzahl von Stützrollen (15) besitzt, um als Gegenlager zu den Pneumatikzylindern (4) zu wirken und den Ski (2) mit dem erforderlichen Anpressdruck über die Schleifkörper (6a) zu halten. Neben das in der Zeichnung abgebildeten Tandemschleifwerkzeug, bestehend aus gleichartigen oder unterschiedlichen Schleif- bzw. Polierkörpern (6a) können selbstverständlich auch andere übliche Schleifwerkzeuge (Endlosschleifbänder, Schleifscheiben, einzelne Schleifsteine etc.) mit beispielsweise integrierter Abziehvorrichtung für das Schleifmittel montiert werden.

Um eine sichere Führung des Schleifwerkzeugs (6) zu gewährleisten, ist eine Linearführung (17) vorgesehen, die aus einem Führungsschlitten (16) auf dem das Werkzeug (6) und der oder die Antriebsmotoren (7) montiert sind, aus entsprechenden Lagerelementen (19), zwei Führungsschienen (18) zur Übertragung der erforderlichen Zustellkräfte in das Gestell (1) oder einer sonstigen zur Kräfteaufnahme geeigneten Vorrichtung, sowie einem Getriebemotor (20) besteht. Die Lagerelemente (19) können dabei vorteilhaft als an den Führungsschlitten montierte luftgestützte Gleitschuhe ausgeführt werden, wodurch auf empfindliche Kugel- oder Rollenlager verzichtet, und durch die dabei austretende Leckluft ein zusätzlicher Reinigungseffekt der Schienen (18) von Schleifstäuben genutzt werden kann.
Das oder die Schleifwerkzeuge (6) werden dabei vorteilhaft höhenverstellbar auf dem Werkzeugschlitten montiert. Wird wie in Fig. 1 dargestellt ein Tandemwerkzeug (6) verwendet, so wird das Werkzeuge (6) vorteilhaft auf einer im Schwerpunkt befestigten zentralen Anstellachse (7a) wippend montiert, wodurch eine noch bessere Anpassung des Werkzeugs an die zu bearbeitende Oberfläche erfolgt.

Nach der Bearbeitung und Rückstellung der Pneumatikzylinder (4) werden die Ski (2) durch das Rückführband (12) und ein oder mehrere als Umlenkkurven gestaltete, eventuell mit Rollen oder anderen Gleitmitteln versehene Leitbleche (13) über Kopf zurück in unmittelbare Nähe oder auf den Zuführtisch der Zuführeinrichtung (8) gebracht. Wird das Schleifgut (2) nicht wieder auf dem Zuführtisch abgelegt, so wird es vorteilhaft auf einer etwas über dem Zuführtisch gelegenen Abstellfläche (8a) deponiert.

Eine mögliche vorteilhafte Ausführung der Zentriereinrichtung im Detail zeigt Fig. 3: An einer vorteilhaft höhenverstellbar am Rahmen montierten Befestigungsstange (25) ist ein U-Rahmen (24) montiert, zwischen dem sich zwei durch Führungsstangen (29) geführte Platten befinden. Auf der unteren Platte (27), die fest mit dem unteren Ende der Führungsstangen (29) und über Federn (32) beweglich mit der oberen Platte (26) verbunden ist, sind die Schwenkarme (22) mit daran befestigten Zentrierstangen (23) und Kulissenrollen (31), federnd schwenkbar, in Stellung "offen" montiert. Die Führungsstangen (29) können sich durch entsprechend dimensionierte Bohrungen auch gegenüber dem U-Rahmen (24) bewegen und sind mit einem vorzugsweise verstellbaren Höhenanschlag (33) versehen. Auf der auf den Führungsstangen (29) gleitenden oberen Platte (26), sind beispielsweise zwei beidseitig als Schiefe Ebene wirkende Schliessplatten (28) montiert. Die Platte selbst ist fest mit dem Ende eines pneumatisch bewegten Stössels (30), dessen zugehöriger Zylinder in der Befestigungsstange montiert ist, verbunden. Bewegt sich der Stössel nach unten, so werden zunächst beide Platten gleichzeitig nach unten bewegt, bis die untere Platte (27) durch den Anschlag (33) gestoppt wird. In dieser Stellung befinden sich die Zentrierstangen (23) in ihrer untersten Position, in der Ebene der zu bearbeitenden Ski. Wird die obere Platte (26) weiter gegen die jetzt feststehende untere Platte geführt, so richten die über Schliessplatten (28), Kulissenrollen (31) und Schwenkstangen (22) bewegten Zentrierstangen (23) das zu bearbeitende Paar Ski aus.

Im folgenden werden noch verschiedene weitere Ausführungen und Erweiterungen der Schleifvorrichtung erwähnt, die nicht in gesonderten Zeichnungen dargestellt sind:

Sollen auf derselben Bearbeitungsvorrichtung gleichzeitig Skier und Snowboards geschliffen werden, so kann in einfacher Weise beispielsweise ein zusätzlicher beweglicher Anschlag auf der der Zuführeinrichtung gegenüberliegenden Seite der Bearbeitungsstation angebracht werden, gegen den ein zu bearbeitendes Snowboard durch das Rückführband (12) angestellt wird.

Durch das zusätzliche Anbringen von Sensoren zur Längenerkennung im Bereich des Zuführtisches ist es, unter Verwendung einer geeigneten Steuerung, in einfacher Weise möglich nur diejenigen Pneumatikzylinder (4) anzusteuern, die im Bereich des Schleifgutes montiert sind. Weiters kann dadurch die Zustellung des Schleifwerkzeugs (6) bis zum Erreichen des Schleifguts beschleunigt werden, was einen höheren Durchsatz bei unterschiedlich langem Schleifgut ermöglicht.

Die anhand der Zeichnungen beschriebene Schleifvorrichtung kann vorteilhaft auch zu einem relativ kompakten vollständigen Skibearbeitungszentrum erweitert werden, indem beispielsweise je ein oder mehrere hinreichend bekannte Bearbeitungswerkzeuge zum Aufbringen von Skibelag, zum seitlichen Schleifen der Kanten sowie zum Wachsauftragen und - abziehen zusätzlich auf dem Rollenkettenband (14) und/oder in einer weiteren Arbeitsstation, die sich auf einer durch das Rückführband beschickbaren höheren Ebene der Schleifvorrichtung befindet, integriert werden.

Soll eine erfindungsgemässe Schleifvorrichtung in eine Bearbeitungslinie für längliche Gegenstände integriert werden, so kann es von Vorteil sein, wenn besagte Gegenstände nach der Bearbeitung auf die der Zuführeinrichtung gegenüberliegenden Seite geführt werden. Dies kann in einer für jeden Fachmann auf dem Gebiet der Fördertechnik leicht erkennbaren Weise durch eine Umgestaltung der Rückführeinrichtung bewirkt werden. Weiters kann bei einer einfacheren Ausführung der erfindungsgemässen Vorrichtung die Rückführeinrichtung (11) ganz weggelassen und durch am oder auf der Seite des Zustelltisches (9) montierte pneumatische Zustellzylinder ersetzt werden, die das Schleifgut (2) vor dem Schleifvorgang vom Zuführtisch (2) auf das Rollenkettenband (10) bewegen und anschliessend seitlich ausstossen. Werden weitere pneumatische Stellzylinder auf der dem Zuführtisch (2) gegenüberliegenden Seite in geeigneter Weise angebracht, so kann einerseits eine Zentrierung einzelner länglicher Gegenstände (2) und andererseits, bei wegklappbar ausgeführten Zustellzylindern, auch ein Rücktransport des Schleifguts (2) mittels der Zuführbänder (10) erfolgen. Selbstverständlich können alle pneumatisch ausgeführten Einrichtungen durch hydraulische Einrichtungen gleicher Funktion ersetzt werden, wenn schweres Schleifgut bewegt werden soll.

Die Erfindung ist nicht auf die beschriebenen oder dargestellten Beispiele beschränkt. So kann eine solche Schleifvorrichtung mit oder ohne zusätzliche Bearbeitungswerkzeugen z.B. Fräser usw. in der Möbelindustrie zum halb- oder vollautomatischen Schleifen von Brettern ebenso vorteilhaft benutzt werden wie in der Fertigung zur Herstellung von Tür- und Fensterrahmen zum Schleifen unterschiedlichster Oberflächen (Holz, Metall, Kunststoff). Unter Bearbeiten im Sinne der Erfindung sind auch alle Veredelungsvorgänge insbesondere Wachsen und Seitenbearbeitungen zu verstehen.

### Legende zu den Hinweisziffern

- 1: Gestell
- 2: länglicher Gegenstand (Schleifgut)
- 3: Fixiereinrichtung
- 4: Pneumatikzylinder zum Fixieren des Schleifguts
- 5: Gummipolster
- 6: Schleifwerkzeug
- 6a: Schleifkörper
- 7: Antriebsmotor für Schleifwerkzeug
- 7a: Anstellachse
- 8: Zuführeinrichtung
- 8a: Abstellfläche
- 9: Zuführtisch
- 10: Zuführband
- 11: Rückführeinrichtung
- 12: Rückführband
- 13: Leitblech oder Rollenführung
- 14: Rollenkettenband
- 14a: Splitterschutzplatte
- 15: Stützrollen
- 16: Werkzeugschlitten
- 17: Linearführung
- 18: Führungsschiene
- 19: Lagerelement
- 20: Getriebemotor
- 21: Zentriereinrichtung
- 22: Schwenkarme
- 23: Zentrierstange
- 24: U-Rahmen
- 25: Befestigungsstange
- 26: obere Platte
- 27: untere Platte
- 28: Schliessplatte
- 29: Führungsstange
- 30: pneumatischer Stössel
- 31: Kulissenrolle
- 32: Federn
- 33: Anschlag

## Patentansprüche

1. Vorrichtung zum Bearbeiten, insbesondere zum Schleifen wenigstens einer Seitenfläche mindestens eines länglichen Schleifguts (2), mit einer Zuführeinrichtung (8), einer Fixiereinrichtung (3), einem Schleifwerkzeug (6) und einer Einrichtung zum Entnehmen des Schleifguts, **dadurch gekennzeichnet, dass** die Förderrichtung der Zuführeinrichtung (8) im wesentlichen quer zur Längsachse des Schleifguts (2) erstreckt ist und die Fixiereinrichtung (3) im Betriebszustand das Schleifgut so fixiert, dass es anschliessend längs der Längsachse durch das gegen die zu schleifende Fläche geführte Schleifwerkzeug (6) schleifbar ist, worauf, nach Lösen der Fixierung, das Schleifgut (2) der Einrichtung zum Entnehmen im wesentlichen quer zu seiner Längsachse entnehmbar ist und wobei die Bewegung des Schleifguts ausschliesslich im wesentlichen quer zu seiner Längsachse erfolgt.

2. Vorrichtung nach Anspruch 1, **dadurch gekennzeichnet, dass** die Zuführeinrichtung (8) einen Zuführtisch (9) und mindestens ein zur Querförderung eines länglichen Schleifgutes (2) geeignetes Zuführband (10) aufweist.

3. Vorrichtung nach Anspruch 1 oder 2, **dadurch gekennzeichnet dass** die Einrichtung zum Entnehmen des Schleifgutes eine Rückführeinrichtung (11) mit mindestens einem zur Querförderung eines länglichen Schleifgutes (2) geeigneten Rückführband (12) umfasst, das so angeordnet ist, dass die Ausgabe des Schleifgutes (2) in unmittelbarer Nähe der oder auf der Zuführeinrichtung (8) erfolgt.

4. Vorrichtung nach einem der vorhergehenden Ansprüche, **dadurch gekennzeichnet, dass** das Schleifwerkzeug (6) parallel zur Längsachse des Schleifguts beweglich - insbesondere an einem Rollenkettenband (14) montiert - ist.

5. Vorrichtung nach einem der vorhergehenden Ansprüche, **dadurch gekennzeichnet, dass** die Fixiereinrichtung (3) mindestens eine Reihe dem jeweiligen Schleifgut (2) zugeordneter Pneumatikzylinder (4) aufweist.

6. Vorrichtung nach einem der vorhergehenden Ansprüche, **dadurch gekennzeichnet, dass** das Schleifwerkzeug (6) mindestens einen, vorzugsweise jedoch zwei rotierende Schleifkörper (6a) oder ein Endlosschleifband aufweist, welche durch eine Andrückvorrichtung, zum Beispiel durch einen weiteren Pneumatikzylinder (4) oder einer Federvorrichtung oder dergleichen, an das Schleifgut (2) pressbar ist.

7. Vorrichtung nach einem der vorhergehenden Ansprüche, **gekennzeichnet durch** eine Linearführung (17) zum Transport des Schleifwerkzeuges (6), die einen Schlitten (16) auf dem das Schleifwerkzeug (6) montiert ist, einen Getriebemotor (20), mindestens eine Führungsschiene (18) und Lagerelemente (19) aufweist, um die Verschiebbarkeit des Schlittens (16) entlang der Längsachse des Schleifgutes (2) zu gewährleisten.

8. Vorrichtung nach Anspruch 7, **dadurch gekennzeichnet, dass** die Lagerelemente (19) als druckluftgestützte Gleitschuhe ausgeführt sind.

9. Vorrichtung nach einem der vorhergehenden Ansprüche mit einer Zentriereinrichtung (21) zum Ausrichten des länglichen Schleifgutes (2) in Schleifposition.

10. Vorrichtung nach einem der vorhergehenden Ansprüche, **gekennzeichnet durch** wenigstens eine der folgenden Zusatzvorrichtungen: eine fest oder beweglich auf dem Schlitten montierte Abziehklinge zur Reinigung des mindestens einen Schleifsteins, eine Sprühdüsenanordnung für die porentiefe Reinigung des Schleifwerkzeuges, weitere Schleifsteine oder Bänder zur seitlichen Kantenbearbeitung des Schleifgutes (2), insbesondere von Gleitsportgeräten, mindestens eine Zuführeinrichtung für Zusatz- oder Veredelungsstoffe, wie beispielsweise Gleitbelag und/oder Wachs, sowie gegebenenfalls mindestens eine Schmelz- und Auftragsvorrichtung und/oder mindestens eine Abziehklinge, um überschüssigen Belag oder Wachs zu entfernen.

11. Vorrichtung nach einem der vorhergehenden Ansprüche, **gekennzeichnet durch** Sensoren zur Längenerkennung des Schleifguts und/oder Sensoren zur Erkennung des jeweiligen Beladungszustandes sowie wenigstens einer Rückmeldevorrichtung und/oder mindestens einer Signalverarbeitungseinheit.

12. Verwendung einer Vorrichtung nach einem der vorhergehenden Ansprüche zur Bearbeitung von Lauf- und Oberflächen von Alpin- und Monoskiern, Snowboards und ähnlichen Gleitsportgeräten.

## Claims

1. Device for machining, in particular for grinding, at least one lateral surface of at least one elongate material (2) to be ground, comprising a feed means (8), a fixing means (3), a grinding tool (6) and a means for removing the ground material, **characterized in that** the transport direction of the feed means (8) is substantially transverse to the longitudinal axis of the material (2) to be ground and, in the operating state, the fixing means (3) fixes the material to be ground in such a way that it can subsequently be ground along the longitudinal axis by the grinding tool (6) guided towards the surface to be ground, whereupon, after release, the ground material (2) can be removed from the means for removal substantially transversely to its longitudinal axis and the movement of the material to be ground is exclusively substantially transverse to its longitudinal axis.

2. Device according to Claim 1, **characterized in that** the feed means (8) has a feed table (9) and at least one feed belt (10) suitable for transverse transport of an elongate material (2) to be ground.

3. Device according to Claim 1 or 2, **characterized in that** the means for removing the ground material comprises a return means (11) having at least one return belt (12) which is suitable for transverse transport of an elongate material (2) to be ground and is arranged in such a way that the material (2) to be ground is delivered in the immediate vicinity of or on the feed means (8).

4. Device according to any of the preceding Claims, **characterized in that** the grinding tool (6) is movable parallel to the longitudinal axis of the material to be ground and in particular is mounted on a roller chain conveyor (14).

5. Device according to any of the preceding Claims, **characterized in that** the fixing means (3) has at least one row of pneumatic cylinders (4) coordinated with the respective material (2) to be ground.

6. Device according to any of the preceding Claims, **characterized in that** the grinding tool (6) has at least one rotating grinding wheel (6a), but preferably two rotating grinding wheels (6a), or a continuous grinding belt which can be pressed against the material (2) to be ground by a pressing apparatus, for example by a further pneumatic cylinder (4) or a spring apparatus or the like.

7. Device according to any of the preceding Claims, **characterized by** a linear guide (17) for transporting the grinding tool (6), which guide has a carriage (16) on which the grinding tool (6) is mounted, a gear motor (20), at least one guide rail (18) and bearing elements (19), for ensuring the displaceability of the carriage (16) along the longitudinal axis of the material (2) to be ground.

8. Device according to Claim 7, **characterized in that** the bearing elements (19) are in the form of compressed air-assisted sliding blocks.

9. Device according to any of the preceding Claims, comprising a centring means (21) for aligning the elongate material (2) to be ground in the grinding position.

10. Device according to any of the preceding Claims, **characterized by** at least one of the following additional apparatuses: a dressing blade mounted in a fixed or movable manner on the carriage and intended for cleaning the at least one grinding stone, a spray nozzle arrangement for thorough cleaning of the grinding tool, further grinding stones or belts for lateral edge machining of the material (2) to be ground, in particular of sliding sport apparatuses, at least one feed means for additional or finishing substances, such as, for example, an antifriction coating and/or wax, and optionally at least one melting and application apparatus and/or at least one drawer blade for removing excess coating or wax.

11. Device according to any of the preceding Claims, **characterized by** sensors for detecting the length of the material to be ground and/or sensors for detecting the respective loading state and at least one feedback apparatus and/or at least one signal processing unit.

12. Use of a device according to any of the preceding Claims for machining sliding surfaces and surfaces of alpine skis, monoskis, snowboards and similar sliding sport apparatuses.

## Revendications

1. Dispositif d'usinage, en particulier pour le meulage-rectification d'au moins une face latérale d'au moins un produit à meuler (2) allongé, avec un dispositif d'alimentation (8), un dispositif de fixation (3), un outil à meuler (6) et un dispositif de prélèvement du produit à meuler, **caractérisé en ce que** la direction de transport du dispositif d'alimentation (8) s'étend sensiblement transversalement par rapport à l'axe longitudinal du produit à meuler (2) et le dispositif de fixation (3), lorsqu'il est à l'état de fonctionnement, fixe le produit à meuler de manière à ce qu'il puisse ensuite être meulé le long de l'axe longitudinal, par l'outil à meuler (6) guidé contre la face à meuler, suite à quoi, après relâchement de la fixation, le produit à meuler (2) est susceptible d'être prélevé du dispositif, en évoluant sensiblement transversalement par rapport à son axe longitudinal, et le déplacement du produit à meuler se faisant exclusivement pratiquement transversalement par rapport à son axe longitudinal.

2. Dispositif selon la revendication 1, **caractérisé en ce que** le dispositif d'alimentation (8) présente une table d'alimentation (9) et au moins une bande d'alimentation (10) convenant pour le transport transversal d'un produit à meuler (2) allongé.

3. Dispositif selon les revendications 1 ou 2, **caractérisé en ce que** le dispositif de prélèvement du produit à meuler comprend un dispositif de retour (11), muni d'au moins une bande de retour (12) convenant pour le transport transversal d'un produit à meuler (2) allongé, la bande de retour (12) étant disposée de manière que la sortie du produit à meuler (2) se fasse à proximité directe du, ou sur le, dispositif d'alimentation (8).

4. Dispositif selon l'une des revendications précédentes, **caractérisé en ce que** l'outil de meulage (6), est monté - en particulier sur une bande à chaîne à rouleaux (14) - de façon mobile parallèlement à l'axe longitudinal du produit à meuler.

5. Dispositif selon l'une des revendications précédentes, **caractérisé en ce que** le dispositif de fixation (3) présente au moins une rangée de vérins pneumatiques (4), associés au produit à meuler (2) respectif.

6. Dispositif selon l'une des revendications précédentes, **caractérisé en ce que** l'outil de meulage (6) présente au moins un, de préférence cependant deux, corps de meulage (6a) rotatif, ou bien une bande de meulage continue, qui est susceptible d'être pressé(e) sur le produit à meuler (2) au moyen d'un dispositif de pressage, par exemple au moyen d'un vérin pneumatique (4) supplémentaire ou d'un dispositif élastique ou analogue.

7. Dispositif selon l'une des revendications précédentes, **caractérisé par** un guidage linéaire (17) pour effectuer le transport de l'outil de meulage (6), guidage présentant un chariot (16) sur lequel l'outil de meulage (6) est monté, un moto-réducteur (20), au moins une glissière de guidage (18) et des éléments de palier (19), afin d'assurer la mobilité du chariot (16) le long de l'axe longitudinal du produit à meuler (2).

8. Dispositif selon la revendication 7, **caractérisé en ce que** les éléments de palier (19) sont réalisés sous la forme de patins de glissement, munis d'une assistance fonctionnelle à l'air comprimé.

9. Dispositif selon l'une des revendications précédentes, avec un dispositif de centrage (21) pour orienter le produit à meuler (2) allongé dans la position de meulage.

10. Dispositif selon l'une des revendications précédentes, **caractérisé par** au moins l'un des équipements additionnels suivants : une lame d'extraction, montée à demeure ou mobile sur le chariot, pour nettoyer le au moins un patin de meulage, un dispositif à buse de pulvérisation pour le nettoyage, à la profondeur des pores, de l'outil de meulage, d'autres patins de meulage ou bandes pour l'usinage latéral des arêtes ou carres du produit à meuler (2), en particulier d'appareils pour les sports de glisse, au moins un dispositif d'alimentation pour des produits d'addition ou de conditionnement, tels que par exemple un film de glissement et/ou de la cire-fart ou, le cas échéant, au moins un dispositif de mise en fusion et d'application, et/ou au moins une lame d'extraction, afin d'éliminer l'excès de film ou de cire.

11. Dispositif selon l'une des revendications précédentes, **caractérisé par** des capteurs pour l'identification longitudinale du produit à meuler et/ou des capteurs pour l'identification de l'état spécifique de chargement ainsi qu'au moins un dispensitif d'information de retour et/ou au moins une unité de traitement de signaux.

12. Utilisation d'un dispositif selon l'une des revendications précédentes, pour l'usinage des faces de glissement et des faces supérieures de skis alpins et de monoskis, de snowboards, et d'appareils de sports de glisse analogues.
